# EUROPEAN PATENT APPLICATION

(11) **EP 0 673 901 A1**
(43) Date of publication of application: **27.09.1995**
(21) Application number: 95200611.2
(22) Date of filing: 14.03.1995
(51) Int. Cl.: C05F 3/00

(54) **Composting method and obtained compost**

(30) Priority: 14.03.1994 NL 9400395
(71) Applicant: Smit, Berend Jan, NL-7475 AK Markelo (NL)
(72) Inventor: Smit, Berend Jan, NL-7475 AK Markelo (NL)
(74) Representative: Prins, Hendrik Willem

(57) **Abstract**

The invention relates to a composting method comprising of:
i) mixing cellulose-containing material with manure;
ii) dewatering the mixture; and
iii) aerobically composting the dewatered mixture to compost,
wherein water extracted from the mixture is preferably mixed with fresh cellulose-containing material, and to the obtained compost.

## Description

The present invention relates to a composting method, more particularly to a composting method wherein cellulose-containing material is mixed with manure which is subjected to aerobic composting after dewatering.

There exists at this moment a manure surplus, which presents problems in respect of the environment, the agricultural sector and the like.

In addition there is an increasing surplus of cellulose-containing material such as straw, chaff, wood chips, bark, verge and ditch waste, which waste results from the mowing of verges and cleaning of ditches. Much of this cellulose-containing material, particularly the verge and/or ditch waste, can only be dumped at increasing cost, while it is no longer permissible to spread such waste over the land. Composting of this material results in compost having soil structure improvement as its main property. Compost is therefore not a desired product and is at present available in relatively large quantities.

The present invention has for its object to decrease the surplus of manure and cellulose-containing material and to find a combined application therefor such that a considerably higher value is attributed to the formed compost due to its improved properties.

The present invention is based on the insight that by mixing manure and this cellulose-containing substance the water from the manure is retained by the cellulose-containing substance, thus resulting in less effluent. It has further been found herein that the ammonia emission from the manure is considerably reduced by mixing with the cellulose-containing material. The subsequent composting is moreover performed at a temperature, for instance 60-80°C, such that detrimental components present in the cellulose-containing material such as weed seeds in the case of verge and/or ditch waste, are rendered inactive by the composting at high temperature. An inherent drawback of cellulose-containing material is therefore avoided in optimal manner.

This is achieved according to the invention with a composting method which comprises of:
i) mixing cellulose-containing material with manure;
ii) dewatering the mixture; and
iii) aerobically composting the dewatered mixture to compost.

An additional advantage of the composting at relatively high temperature is that the amount of water absorbed into the cellulose-containing material is combusted by the aerobic composting, thus avoiding in economic manner the necessity of concentrating the manure at comparatively high cost and of treating the liquid formed therein as in the past. The compost formed according to this method is of a nature such that it can be used on agricultural land, whereby the humus content, greatly reduced at this moment by spraying with semi-liquid manure, can be restored to its previous level. As a result of the manure included therein, the compost further has a manuring function due to the manure components present therein, that is, nitrogen, phosphor, potassium, calcium and so on, whereby up to for instance 50 tons of compost can be applied per hectare.

Due to the composting at relatively high temperature the formed compost is essentially free of weed seeds and the like, whereby the use of herbicides on agricultural land can be greatly reduced, for instance by more than 50%.

Finally, the obtained compost is of a low density, so that transport to other regions is economically very cost-effective compared to transport of water-containing manure.

Water extracted from the mixture is preferably mixed with fresh cellulose-containing material. Recycling of water makes possible a considerable limitation of the quantity of formed liquid effluent and in particular enables the method to be performed without this resulting in a liquid effluent flow which would otherwise possibly have to be cleaned and refined before it could be released into the environment. Use is made as preferred material for the cellulose material of verge and/or ditch waste because this is material which cannot be dumped without problem and is thus negative demand material.

If in further preference the formed liquid is subjected to microfiltration and/or reverse osmosis, a very advantageous process results because in principle the remaining liquid can after cleaning usually be discharged into the sewer system or even into the environment.

If in further preference the solid substance formed during the microfiltration and/or reverse osmosis is subjected to the aerobic composting, a composting method results having as disposable products the valuable compost and water which can be discharged.

In order to further enhance the composting it is recommended that the dewatered mixture is inoculated with micro-organisms which enhance the composting. It is then possible within a period of 2-10 weeks, preferably 3-6 weeks, to form an excellent compost, this depending on the prevailing outside temperature. It is further recommended herein that the composting takes place at a temperature between 65 and 75°C and that regular aerating (once a week) takes place, while the established temperature conditions are adversely influenced as little as possible.

The relative quantities of the cellulose-containing material depend on the dry substance content of the manure and the type of waste.

The type of waste consists preferably of mown material from verges and/or ditches. Waste and manure can generally be mixed in a ratio lying between 0.5 and 1. The ratio is more preferably 1 : 1. It has been found in practice that a very favourable mixing ratio of manure to waste amounts to 0.5 : 1.

The present invention relates finally to the compost obtained with the composting method in which are composted the mixture of dewatered manure and cellulose-containing material, in particular verge and/or ditch waste.

Mentioned and other features of the method according to the invention will be further elucidated hereinbelow with reference to a number of embodiments, one of which is shown in the form of a drawing.

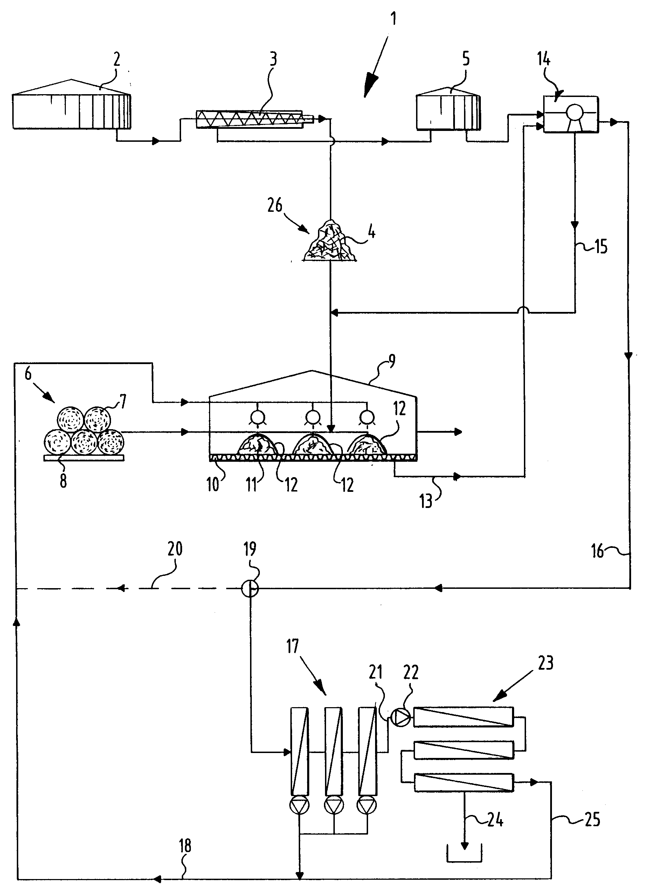

Figure 1 shows schematically as flow diagram a method for the composting according to the invention and the installation used therein.

Figure 1 shows the installation 1 for performing the composting method according to the invention. The installation 1 comprises a manure tank 2 in which manure, for instance animal manure, is stored. From manure tank 2 the manure is supplied to a liquid/solid separator 3. This separator 3 can take the form of a filter belt press, a worm extruder and the like. It is important that the formed dewatered manure 4 has a dry substance content of about 40-80%, preferably 50-60%. The remaining liquid or liquid manure is stored in a tank 5.

The installation 1 further comprises a store 6 for verge and/or ditch waste which is supplied in rolls 7 and stacked on a platform 8.

The dewatered manure 4 and the waste 7 are mixed in a ratio of 1 : 5 and therein carried into a hall 9 onto a permeable floor 10 in the form of gullies 11 with a length of for instance 50 metres, a width of 3 metres and a height of 2 metres.

The material in the gulley 11 is chopped and therein aerated. In order to avoid odour nuisance a plastic sheet 12 is laid over the gulley.

Depending on the season the sheet 12 is removed after for instance one week and aerating again takes place by chopping, wherein the sheet 12 is rolled up and unrolled.

Prior to the composting, formed water is drained via a conduit 13 to a separation 7, 14 and there screened with thin manure coming from the tank 5. The retained fraction is carried via conduit 15 to the composting hall in order to be composted there after mixing with waste 7.

The filtrate is supplied via conduit 16 to a per se known microfiltration unit 17 which consists of a number of microfiltration units. The filtrate can however also be returned to the composting hall 9 and there mixed with manure and verge and/or ditch waste.

A concentrated solid-containing fraction is returned via conduit 18 to the composting hall 9 and carried to the gullies after removal of the sheet 12. In principle it is possible, depending on the composting conditions to be used, for the filtrate also to be supplied to the composting hall from conduit 16 via a valve 19 and the conduit 20.

The liquid fraction from the microfiltration unit 17 is supplied via a conduit 21 and a pump 22 to a per se known reverse osmosis unit which consists of a number of units. Created during the reverse osmosis is water 24 which in principle can be drained into the environment or to the sewer system. A solid-containing fraction is discharged via a conduit 25 and likewise arrives at the composting hall 9 via conduit 18.

According to a second embodiment of a method according to the invention mown material of verge grass and ditch waste is chopped, tipped in loose form, stacked and transported onto a fixed floor. The chopped verge and/or ditch waste is mixed with animal manure from a manure tank, for instance in a ratio of 1 : 1. The formed mixture of waste and manure is subjected to a solid/liquid separation, for instance using an extruder or filter belt press. The dewatered mixture has a dry substance content of about 40-80%, preferably 50-60%. The subsequent composting of the dry fraction takes place at a temperature lying generally between 50-90°C, such as 60-80°C, wherein regular turning over takes place for about 30 days in order to obtain a high-quality compost with manure value. The addition of cellulose-containing material results in an increase in the C:N ratio, whereby the formation of ammonia is decreased, and a dry fraction can result with a dry substance content of about 50% and more. The remaining liquid or liquid manure is stored in a tank and can be fed back and mixed with freshly supplied verge/ditch waste.

Regular turning over of the material depends on the season during which the composting is performed, although an excessive drop in temperature during the composting must be prevented.

In order to avoid too many larger solid particles being present in the verge and/or ditch waste such as stones, sand and iron parts, it is further recommended that such materials are removed in advance from the supplied verge and/or ditch waste. The material can herein be carried via a lifting conveyor belt to two successive rollers each equipped with spring-back teeth so that stones pressing against the teeth can be carried away in a direction opposite to the rotation direction of the rollers through the teeth springing backwards, while the grass can be transported to a similar roller which feeds the waste with the stones removed to a shaking device, over which grass is displaced in forward direction by upward shaking over inclining surfaces and small stones and sand present in the grass can be filtered out and discharged. This pre-cleaned waste with a relatively high carbon content is mixed with semi-liquid manure with a relatively high nitrogen content, which mixing takes place for 0.5 to 4 hours, preferably 1-2 hours.

With the method according to the invention it is possible to process for instance 12,000 tons of liquid and animal manure with 12,000 tons of verge and ditch waste to about 8,000-12,000 tons of compost which not only has an optimum soil structure-improving property but also has a good manure value.

The compost contains a very acceptable phosphate content, wherein 50 tons of compost can be applied per hectare on agricultural land at an application norm of 100 kg phosphate per hectare.

It is finally noted that micro-organisms such as active sludge and standing bacteria cultures can be added to the dewatered mixture.

## Claims

1. Composting method comprising of:
i) mixing cellulose-containing material with manure;
ii) dewatering the mixture; and
iii) aerobically composting the dewatered mixture to compost.

2. Method as claimed in claim 1, wherein water extracted from the mixture is mixed with fresh cellulose-containing material.

3. Method as claimed in claim 1 or 2, wherein the cellulose-containing material comprises verge and/or ditch waste.

4. Method as claimed in claims 1-3, wherein the formed liquid is subjected to microfiltration and/or reverse osmosis.

5. Method as claimed in claim 4, wherein solids formed during the microfiltration and/or reverse osmosis are subjected to the aerobic composting.

6. Method as claimed in claims 1-5, wherein the dewatered mixture is inoculated with micro-organisms which enhance the composting.

7. Method as claimed in claims 1-6, wherein manure and verge and/or ditch waste are mixed in a ratio of 0.5 : 2, preferably 1 : 1, more preferably 1 : 0.5.

8. Compost obtained by composting dewatered manure and verge and/or ditch waste.
